(19) Europäisches Patentamt
European Patent Office
Office européen des brevets

(11) EP 3 912 314 B1

(12) EUROPEAN PATENT SPECIFICATION

(45) Date of publication and mention
of the grant of the patent:
**14.02.2024   Bulletin 2024/07**

(21) Application number: **20700045.6**

(22) Date of filing: **07.01.2020**

(51) International Patent Classification (IPC):
$H04L\ 47/00^{(2022.01)}$    $H04L\ 47/122^{(2022.01)}$
$H04L\ 47/80^{(2022.01)}$    $H04L\ 47/24^{(2022.01)}$
$H04L\ 47/76^{(2022.01)}$    $H04L\ 43/08^{(2022.01)}$
$H04L\ 41/0816^{(2022.01)}$    $H04L\ 43/16^{(2022.01)}$
$H04L\ 41/0895^{(2022.01)}$    $H04L\ 41/40^{(2022.01)}$
$H04L\ 43/20^{(2022.01)}$    $H04L\ 47/70^{(2022.01)}$
$H04L\ 41/5003^{(2022.01)}$

(52) Cooperative Patent Classification (CPC):
**H04L 47/00; H04L 41/0816; H04L 41/0895;
H04L 41/40; H04L 43/08; H04L 43/16; H04L 43/20;
H04L 47/122; H04L 47/24; H04L 47/76;
H04L 47/808; H04L 47/822;** H04L 41/5003

(86) International application number:
**PCT/EP2020/050236**

(87) International publication number:
**WO 2020/148116 (23.07.2020 Gazette 2020/30)**

(54) **NETWORK MANAGEMENT**

NETZWERKVERWALTUNG

GESTION DE RÉSEAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.01.2019   EP 19151635**

(43) Date of publication of application:
**24.11.2021   Bulletin 2021/47**

(73) Proprietor: **British Telecommunications public
limited company
London E1 8EE (GB)**

(72) Inventors:
• **CUEVAS RAMIREZ, Maria
London EC4V 5BT (GB)**
• **BROWN, Ruth
London EC4V 5BT (GB)**
• **HART, Jonathan
London EC4V 5BT (GB)**

(74) Representative: **British Telecommunications
public limited company
Intellectual Property Department
9th Floor
One Braham
Braham Street
London E1 8EE (GB)**

(56) References cited:
**EP-A1- 1 768 351     WO-A1-2018/121880**

**Description**

Field of Invention

The present invention relates to a method of managing a telecommunications network, and in particular to a method of managing the telecommunications network so as to improve fairness amongst competing users; the present invention also relates to a telecommunications network and a computer readable medium therefor.

Background

Network performance (*e.g.* bandwidth, latency, jitter, *etc.*) amongst users of a network can vary greatly; this may (all things otherwise being equal) result in unfair conditions amongst users that are engaged in a competitive activity over the network (such as gaming, auctions, voting, gambling/betting, financial trading, *etc.*) or that use the network to support a competitive activity (such as a sporting competition).

For example, a user that receives information over a network before other users gains a competitive advantage, not least, by being able to react sooner to new information. It is therefore an aim of the present invention at least to alleviate the aforementioned problem.

EP1768351 A1 discloses a method for equalizing latency among a group of connections that are being used by the same latency-sensitive application, such as for multi-player network gaming. Delay is added to the packet flow in each connection as necessary at the provider edge router connecting the application server to the network. An NMS connected to the provider edge router continuously monitors the round-trip delay of each connection, determines the additional delay of each connection required to equalize the delays, and informs the provider edge router. The provider edge router buffers traffic on each connection for the respective duration as indicated by the NMS. The NMS may also reroute some of the connections over higher latency resources to reduce the amount of buffering required, which provides the additional advantage of using what might otherwise be less used or economically less valued resources.

WO2018121880A1 discloses network nodes and methods for control thereof for dynamic network slice selection. An AMF (300, 104) receives a UE request originating from the UE, the UE request being any one of a registration request and a session request. A network slice requester (316) controls a transmitter (302) to transmit a network slice selection request to a PC_NSS (400, 108). A selection data manager (416) of the PC_NSS determines selection data specifying one or more UE specific parameters affecting network slice selection. A network slice selector (414) selects a network slice assignable for the UE, based on the selection data, determines network slice data and a corresponding network slice routing rule, and transmits them to the AMF. A network slice manager (318) of the AMF controls assignment of a network slice to the UE in dependence on the received network slice data and network slice routing rule.

Statements of Invention

According to a first aspect of the present invention, there is provided a method of managing a telecommunications network, the telecommunications network having a first user and a second user, and the telecommunications network comprising a first network slice onto which the first user is allocated, the method comprising the step of: measuring network performance in respect of the first user and in respect of the second user; comparing network performance associated with the first user and the second user; identifying whether there is a disparity between the network performance associated with the first user and the second user that exceeds a threshold; and if it is identified that the disparity exceeds the threshold, adapting the network configuration of the first network slice so as to improve network performance for the first user and to reduce the disparity in the network performance associated with the first user and the second user.

In this way, there is provided a method of improving the fairness amongst network users, and therefore enabling competition on an equal footing insofar as performance of the telecommunications network facilitating such competition is concerned.

As used herein, the term "allocated" with reference to allocation of a first user to a network slice, preferably connotes: the identification or selection of a network slice onto which to register the first user, but where the first user has not yet - but is to be - registered with the first network slice; where the first user is registering with the first network slice; and/or where the first user is already registered with the first network slice.

As used herein, the phrase "measuring network performance" preferably connotes measuring, retrieving, determining, identifying, estimating and/or inferring network performance.

As used herein, the term "user" preferably connotes a User Equipment (UE) and/or an individual (as identified via, for example, an account or other personal identifier).

Optionally, the telecommunications network is a local or wide area network. Optionally, the network is a wired (fixed) and/or a wireless network. Optionally, the telecommunications network is a mobile cellular or satellite-enabled network.

Optionally, the network configuration of the first network slice includes: allocation of users onto and/or from the first network slice; allocation of processing resources to or from the first network slice; and/or rules for handling data packets.

Optionally, the network performance (or an associated metric) includes: latency; jitter; error rate; throughput; bandwidth; Quality of Service; and/or Round-Trip Time (RTT). Preferably, the method further comprises the step of ascertaining a current configuration of the first network slice prior to adapting the first network slice.

Optionally, the first user and second users are competing over the network at the same time. Optionally, the first user and second users are competing over the network at different times.

Preferably, the network configuration of the first network slice is performed by re-allocating the first user to a second network slice. Optionally, only the first user is re-allocated to the second network slice. Optionally, the first and/or second users are re-allocated onto the same network slice. Optionally, adapting the network configuration of the first network slice comprises adapting the User Plane Function (UPF). Optionally, said second network slice is created in response to identifying a disparity between the network performance associated with the first user and the second user that exceeds the threshold. Optionally, the second network slice is created with a configuration (for example, in the same manner as for the first network slice) to reduce the disparity in the network performance associated with the first user and the second user. Optionally, the first network slice is closed or deleted when re-allocating the first user to the second network slice.

Preferably, adapting the network configuration of the first network slice comprises prioritising and/or impeding processing of a network communication to and/or from the first user. Optionally, impeding processing of a network communication includes inducing a handicap upon the processing of network communications, which may be performed by increasing latency, error rate and/or jitter, and/or by reducing: speed; and/or bandwidth.

Preferably, adapting the network configuration of the first network slice comprises changing a bandwidth allowance of the first network slice. Preferably, adapting the network configuration of the first network slice comprises reallocating network resources to and/or from the first network slice. Preferably, adapting the network configuration of the first network slice is performed without changing a pathway through the telecommunications network of network communications from and/or to the first user.

Optionally, adapting the network configuration of the first network slice is performed by changing a path through the telecommunications network of a network communication from and/or to the first user. The path of a network connection through the telecommunications network may include the identity and/or sequence of nodes through which a network communication is routed. Optionally, the path is adapted so that it is substantially identical for the first and the second users. Adapting the path of a network connection may include changing the Internet Service Provider, Mobile Network Operator, Radio Access Network and/or network access technology/protocol.

Preferably, adapting the network configuration of the first network slice comprises changing the location within the telecommunications network of a network resource to be accessed by the first and/or second user/s. Preferably, the location of the network resource is made the same for the first and second users. Preferably, adapting the network configuration of the first network slice comprises corrupting a network communication from and/or to the first user.

Preferably, the network configuration of the first network slice is adapted so as to make more equal the network performance for the first and second user. Preferably, the network configuration of the first network slice is adapted so as substantially equalise the network performance, optionally connoting making network performance equal to an extent that it provides no - or negligible - competitive advantage to the first or second users, and more preferably, such that the disparity in network performance is no more than 20%, still more preferably no more than 10%, yet more preferably no more than 5%, still more preferably no more than 2%, and even more preferably no more than 0.5%. Optionally, the network configuration is adapted so as to reduce the disparity in network performance by at least 25%, more preferably by at least 50%, still more preferably by at least 75%, yet more preferably by at least 95%, and still more preferably by at least 99%.

Preferably, the network configuration of the first network slice is adapted so as to worsen network performance for the first user.

Preferably, the method further comprises the step of determining an extent of the disparity, and adapting the network configuration of the first network slice in proportion to the determined extent of disparity.

Preferably, the method further comprises the step of limiting the extent to which the network configuration of the first network slice is adapted. Optionally, the network configuration is adapted within a threshold extent (maximum and/or minimum) value. Optionally, the threshold is a fixed and/or an absolute value. Optionally, the threshold is dynamic and/or proportional to the extent of disparity.

Preferably, the method further comprises the step of limiting the frequency with which the network configuration is adapted. Optionally, the measured network performance is filtered, time-averaged and/or smoothed so as to help reduce the frequency with which the network configuration is adapted.

Optionally, the network performance comprises a plurality of network performance metrics, and wherein the network configuration is adapted in dependence upon a weighting and/or ranking of the plurality of network performance metrics. Optionally, the weighting and/or ranking is dependent on the identified activity.

Preferably, the method further comprises the step of identifying an activity in which the first and second users are, or are to be, engaged over the telecommunications network. Optionally, the activity is a type of activity, for example competitive or non-competitive, or in another example a uniquely-identifiable activity. Optionally, identifying the activity is performed by identifying a type of network communication from the first and second users, wherein the type of network communication may be: data format; session information; and/or network address information. Preferably, the step of measuring the network performance (and/or adapting the network) is triggered in dependence on the type of activity, and more preferably in dependence on identifying the type of activity as a competitive (multi-user) activity performed over the telecommunications network. Optionally, the method further comprises the step of adapting the network configuration in dependence on identifying that the first and second users are, or are to be, engaged in the same activity. Optionally, the extent to which the network performance is adapted is dependent on the identified activity.

Preferably, network performance is provided by at least one metric, and wherein said metric is selected in dependence on the identified activity. Preferably, a subset (to those available to be measured) of network performance metrics is selected for measuring in dependence on the identified activity.

Preferably, the network configuration is adapted in dependence on the identified activity. Preferably, the way in which network configuration is adapted includes how network performance is adapted and where, within the telecommunications network, the network configuration is adapted.

Optionally, the network configuration is adapted for the first and/or second user/s. Optionally, the network configuration is adapted for the second network slice.

Preferably, the method further comprises the step of identifying when the first and second users are both competing in a competitive activity over the telecommunications network, and performing said method when identifying that the first and second users are both competing in the competitive activity. Optionally, first and second users are both competing in said activity at the same time.

Preferably, the method further comprises the step of reversing the adapting of the network configuration. Optionally, the adapting of the network configuration is reversed (partially or fully) when it is identified that the participation of the first and/or second user in said activity has ended.

According to another aspect of the invention, there is provided a telecommunications network for facilitating the interaction between a first user and a second user over the telecommunications network, comprising a first network slice onto which the first user is allocated; a processor configured to: measure network performance in respect of the first user and of the second user; compare network performance associated with the first user and the second user; identify whether there is a disparity between the network performance associated with the first user and the second user that exceeds a threshold; and a controller configured to: adapt the network configuration of the first network slice so as to improve network performance for the first user and to reduce the disparity in the network performance associated with the first user and the second user when the disparity exceeds the threshold.

Optionally, the processor and/or the controller is/are provided: in a core of the telecommunications network; an edge of the telecommunications network; and/or User Equipment (UE) associated with the first and/or second user/s. The controller may be provided as, at least part of, the Access and Mobility management Function of the core network. Optionally, the network slice is an end-to-end network slice.

According to yet another aspect of the invention, there is provided a computer-readable storage medium comprising instructions that, when executed by a processor associated with a telecommunications network, causes the telecommunication network to perform a method as described above.

In this specification the word 'or' can be interpreted in the exclusive or inclusive sense unless stated otherwise.

Furthermore, features implemented in hardware may generally be implemented in software, and vice versa. Any reference to software and hardware features herein should be construed accordingly. The invention extends to a method of managing a telecommunications network and to a telecommunications network as described herein and/or substantially as illustrated with reference to the accompanying drawings. The present invention is now described, purely by way of example, with reference to the accompanying diagrammatic drawings, in which:

Figure 1 shows an exemplary network;
Figure 2 shows a process for improving network fairness of the network;
Figure 3 is a signalling diagram showing the signalling between a network user and the remainder of the network in order to improve network fairness;
Figures 4 show exemplary tables of network performance values for improving network fairness of the network; and
Figure 5 shows a process for improving network fairness amongst users engaging in an auction.

Specific Description

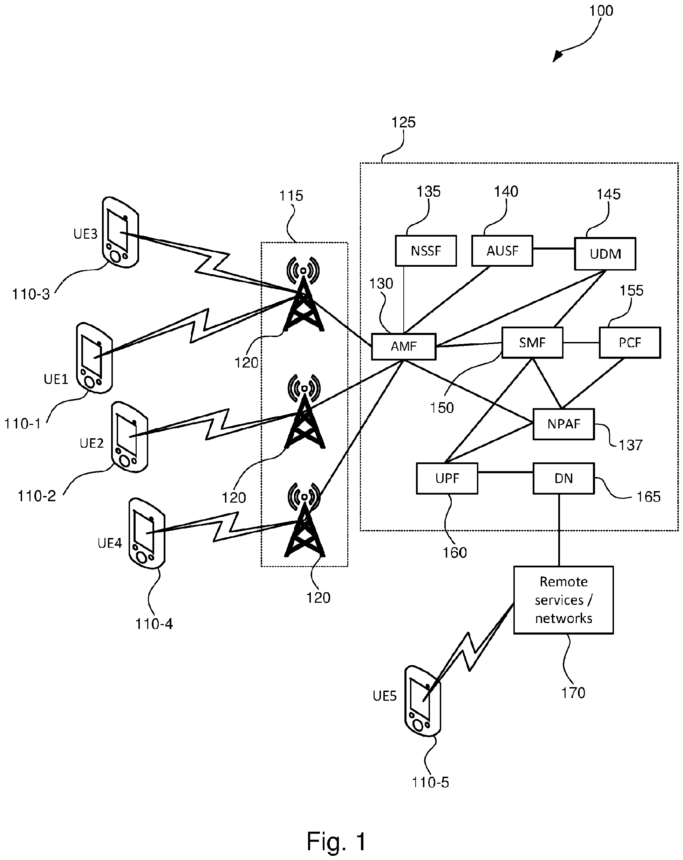

Figure 1 shows an exemplary telecommunication network 100. The network 100 is a mobile cellular network comprising a plurality of User Equipment (UE) 110 (*e.g.* in the form of a mobile cellular device, laptop or tablet). Each UE 110 is configured to utilise the telecommunications network 100 by accessing a Radio Access Network (RAN) 115, as provided by a RAN access point 120 (*e.g.* in the form of a macro-, micro-, pico- or femto-cell site). In turn, the RAN access point 120 is connected to a core of the network 125.

The core network 125 is available to connect to remote networks and/or services 170, and not least to the Internet. As a result, the plurality of UEs 110-1 to 110-4 are also able to communicate with a UE 110-5 on a remote network 170.

The core network 125 in turn comprises the following functional components:

- Access and Mobility management Function (AMF) 130;
- Network Slice Selection Function (NSSF) 135;
- Network Performance Ascertaining Function (NPAF) 137;
- Authentication Server Function (AUSF) 140;
- Unified Data Management (UDM) 145;
- Session Management Function (SMF) 150;
- Policy Control function (PCF) 155;
- User Plane Function (UPF) 160; and
- Data Network (DN) 165.

By means of the aforementioned functional components, the network 100 provides and manages a plurality of network slices. Network slicing provides a virtualised network comprising multiple logical networks- "network slices" - within a single physical network. This is typically undertaken to offer differentiated service models, which might include varying performance and/or stability characteristics within a network. The NSSF 135 is configured to identify and to select a suitable network slice for UEs.

In overview, the network 100 adapts its configuration in order to improve the fairness of the network for users; this is achieved by reducing significant inequality in network performance amongst the UEs 110, when such UEs are together partaking in an appropriate competitive activity over the network 100 and/or are relying upon the network to support a competitive activity.

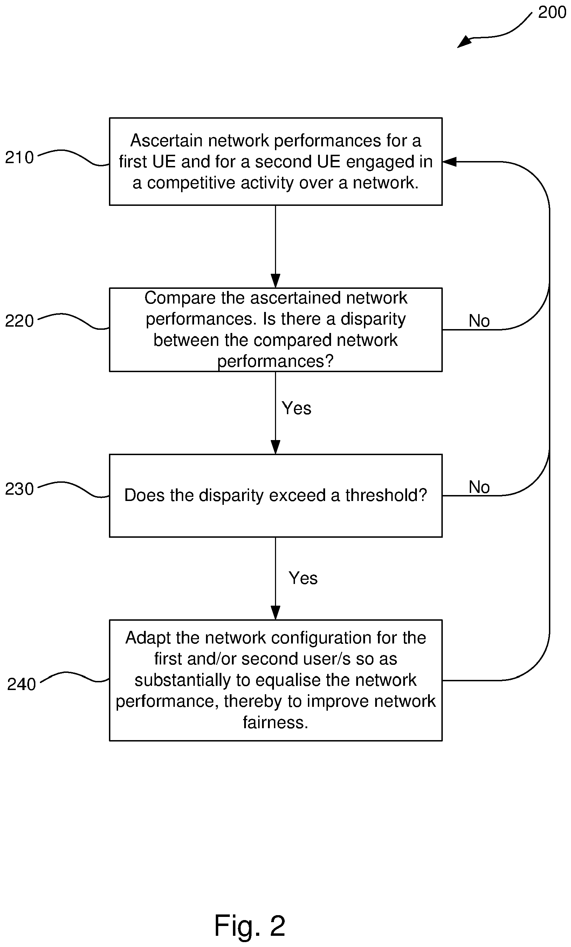

Figure 2 outlines a process 200 for managing the network 100 so as to improve fairness for a first UE 110-1 and for a second UE 110-2 that are engaged in a competitive activity over the network 100. In a first step 210, network performance for the first 110-1 and second 110-2 UEs is ascertained by the NPAF 137 (by means of interfaces with, not least, the UPF 160).

Network performance includes: jitter; latency; bandwidth (download and/or upload); Round-Trip Time (RTT) delay; and error rate.

In a next step 220, the ascertained network performance in respect of the first UE 110-1 is compared to that of the second UE 110-2 so as to assess whether there is a disparity (*i.e.* an inequality) in the network performance for each UE. If so, an evaluation is made as to whether or not the disparity is significant, for example by assessing whether the disparity exceeds a threshold 230.

If the disparity is significant, this may indicate that the network configuration is such that the first 110-1 or second UE 110-2 has a competitive advantage that may affect the outcome of the competitive activity. As a result, in step 240, the network 100 is reconfigured so as to improve fairness for the first and second UEs, as outlined below in more detail.

To improve fairness, the network configuration is adapted so as to affect network performance in such a way as to:

- Lower network performance, for example for the first UE 110-1 so as to reduce the disparity with the second UE 110-2 (where the second UE 110-2 originally has a worse network performance than the first UE 110-1); and/or
- improve network performance, for example for the second UE 110-2 so as to reduce the disparity with the first UE 110-1 (again, where the second UE 110-2 originally has a worse network performance than the first UE 110-1).

In the claimed invention, the network configuration of the first network slice, onto which the first user is allocated, is adapted so as to improve network performance for the first user and to reduce the disparity in the network performance associated with the first user and the second user.

Adapting the network configuration so as to reduce the disparity in network performance is performed, for example, by:

- changing the network or part thereof (*e.g.* a wireless wide area cellular network, a fixed-line network or wireless local area network) over which the first UE 110-1 and/or the second UE 110-2 interact, and in particular changing the network slice onto which the first UE 110-1 and/or the second UE 110-2 are associated, this includes moving:

- the first UE 110-1 and/or the second UE 110-2 onto:

  - the same network 100, and in particular onto the same network slice; and
  - a different network, and in particular a different network slice.

- changing the path of a network communication from and/or to a given UE 110, including making the network paths for a plurality of UEs:

  - identical (to the extent possible), including:

    - registering each UE with the same Mobile Network Operator (MNO) or Internet Service Provider (ISP);
    - having each UE utilise the same RAN access point 120; and
    - accessing resources from the same location within the network, such as the same server or node.

  - different (beyond that inherently necessary), including performing actions opposite to those outlined above in relation to making the network paths identical.

- changing the location, within the network 100, of a resource that both the first and second UEs 110-1, 110-2 are accessing, for example moving resources closer to the network edge, and in particular to a RAN access point 120 used by each UE;
- increasing or decreasing the priority with which a network communication associated with a given UE is handled by the network;
- reducing or inducing delays in the handling of a network communication associated with a given UE (thereby to change latency and/or jitter), for example by buffering such network communications;
- increasing or decreasing bandwidth and/or transfer speeds for a given UE (*i.e.* throttling); and/or
- inducing errors in the handling of network communications (*e.g.* corrupting data packets) associated with a given UE (thereby to increase error rate).

Any combination of the above-listed methods is used to improve or degrade network performance for a given UE, thereby to help equalise network performance amongst UEs in an effort to improve network fairness.

The network configuration for a given UE, and in particular the configuration of a network slice with which a UE is - or is to be - associated, is adapted by the network core 125. In particular, the network configuration is adapted by the AMF 130, SMF 150 and/or the UPF 160, as appropriate.

Once the network configuration has been adapted so as to improve network fairness, the process 200 then reiterates by reverting to the first step 210. Likewise, if at step 220 there is no disparity, or if at step 230 the disparity is insignificant (in that it does not exceed the threshold), then the process also reiterates by reverting to the first step 210.

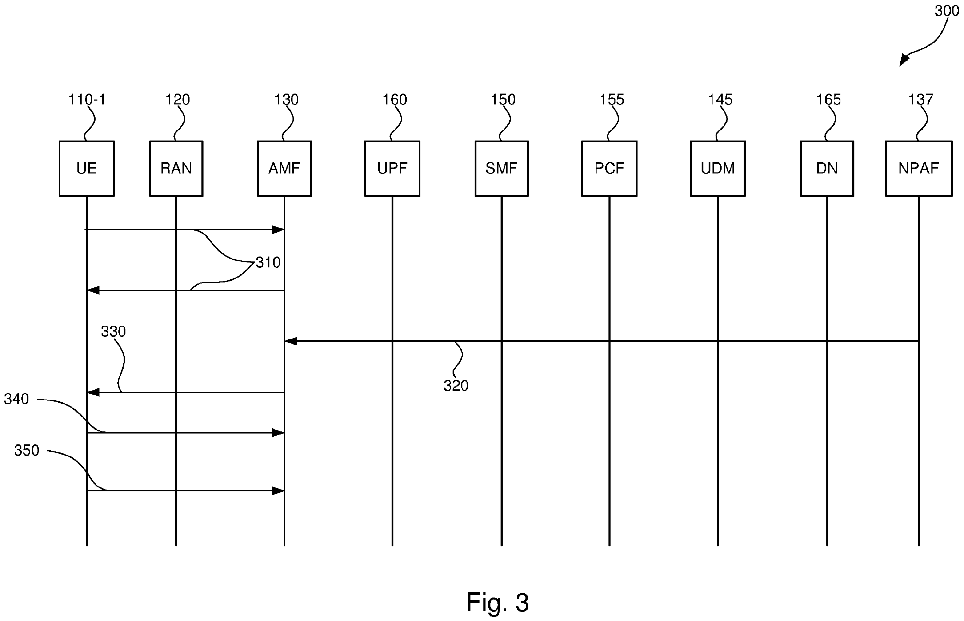

Figure 3 shows, in more detail, a process 300 for improving network fairness for a given UE (in particular the signalling across the network 100) by reallocating the UE onto a different network slice so as to improve network fairness.

In this example, the first 110-1 and second 110-2 UEs are competing against one another in a competitive activity over the network 100.

In a first step 310, the first UE 110-1 and the core network 125 (and in particular the AMF 130) engage in signalling, via the RAN 120, so as to establish a connection. The UE is allocated, by means of the NSSF 135, to a first network slice. A Protocol Data Unit (PDU) session is thereby established, and this is achieved, for example, as outlined in the 3rd Generation Partnership Project (3GPP) Technical Specification 23.502, version 15.2.0, section 4.3.2.2.

In a next step 320, the NPAF 137 ascertains (via an interface, at least, with the UPF 160) the network performance in respect of the first UE 110-1 and reports the ascertained network performance to the AMF 130.

In a corresponding manner, steps 310 and 320 are repeated for the second UE 110-2 (not shown in Figure 3), so as to connect the second UE 110-2 to the network 100 (or another network) and to measure the network performance associated with the second UE 110-2.

In accordance with the process described with reference to, and as shown in, Figure 2, the NPAF 137 compares the ascertained network performances of the first 110-1 and second UEs 110-2 so as to identify any significant disparities in network performance. In this example, the network performance associated with the second UE 110-2 is ascertained to be significantly better than the network performance associated with the first UE 110-1.

In view of the ascertained disparity in the network performances, it is sought to improve the balance in network performance amongst the UEs, and in particular to improve the network performance in respect of the first UE 110-1.

Accordingly, the NSSF identifies a network slice - a second network slice - that will help achieve this result; to do so, the AMF 130 requests Network Slice Selection Assistance Information (NSSAI) from the NSSF 137 based on a desired specification for the second network slice, as provided by the AMF 130. Accordingly, the AMF 130 instructs 330 the first UE to detach from the first network slice and instead to attach to the second network slice, as identified by the NSSF. The first UE 110-1 subsequently requests attachment to the second network slice 340 and, once said request has been accepted, a Protocol Data Unit (PDU) session with the second network slice 350, for example as outlined in the 3rd Generation Partnership Project (3GPP) Technical Specification 23.502, version 15.2.0, section 4.3.2.2.

As ascertained by the NSSF, the network performance of the second network slice offers improved network performance over the first network slice onto which the first UE was allocated, and a network performance that more closely matches the network performance experienced by the second UE. In this way, the first and the second UE may compete over a network having substantially similar network performance.

Certain networks allow UEs to engage in activities that do not involve competition amongst various UEs. As a result, it may not be appropriate to attempt to improve fairness as outlined herein for all activities, nor for all UEs.

In such circumstances, the network 100 is configured to distinguish between activities where it is appropriate to improve network fairness ("competitive activities") and activities where it is not possible and/or not appropriate to improve network fairness ("non-competitive activities"). Accordingly, the network 100 will only improve network fairness as outlined herein for such competitive activities. Examples of competitive activities include: multiplayer games; financial trading; auctions; voting; and data communication that supports a competitive activity and/or "real life" competition (*e.g.* professional sporting events, such as motor racing).

A non-competitive activity is an activity: with no inherent competition; relating solely to the communication of information that has no ability to affect the outcome of a competitive activity and/or "real life" competition; serving only a single UE; and/or where the outcome is driven solely by chance. Example of non-competitive activities therefore typically include: on-demand streaming of media; single-player gaming; and games purely of chance.

In order to differentiate between competitive and non-competitive activities, the network 100 identifies (or infers) the activity (explicitly or simply whether or not it is a competitive activity) by inspecting network communications traversing the network 100, for example by assessing the:

- network, transport and/or application layer type and/or values;
- payload data type, format and/or content (*e.g.* whether it is video, sound, voice, text, image, *etc.*);
- encryption protocol;
- whether the traffic has been allocated to an activity-specific network slice (such as a low-latency gaming network slice); and/or
- type of UE receiving or sending the network communication (*e.g.* hardware type and/or operating software version).

Identification of the activity is performed by the core network 125 (in particular by means of the UPF 160, which then reports identified activities and/or corresponding sessions to the AMF 130 and/or NPAF 137) and/or by the UE(s) that is(/are) engaged in the activity. In addition or alternatively, the activity is communicated to the network by the UE and/or by a network server (or servers) that facilitates the activity. Accordingly, there is provided an interface for informing the AMF 130 and/or the NPAF 137 that traffic associated with a particular session and/or competitive activity is to be monitored.

It will be appreciated that, where a network restricts access only to competitive activities (such as a private network - or network slice - dedicated solely to financial trading) it is not necessary to differentiate between competitive and non-competitive activities as outlined above.

In certain networks, the network 100 is configured to differentiate between competing and non-competing UEs, where competing UEs are, together and at the same time, engaged in the same competitive activity (whether or not against one another). Non-competing UEs are UEs that are not engaged in an activity - whether or not a competitive activity - together and/or at the same time. Competing UEs may be competing at the same time or at different times.

The processes described herein is performed when there are at least two competing UEs.

As a result, in order to improve network fairness amongst competing UEs, the network 100 is configured to identify sets of competing UEs, for example by using a similar process to that for identifying a competitive activity (as described above), as performed by the core network 125 and/or by the UE(s) that is(/are) engaged in the same competitive activity, which is facilitated by network servers (or nodes) facilitating the competitive activity.

Network performance is ascertained by the first UE 110-1, the second UE 110-2 and/or the core network 125, specifically the NPAF 137.

In one example, network performance is directly measured. Alternatively, or additionally, network performance is estimated or inferred, for example from a network configuration for the first UE 110-1 and/or second UE 110-2, as established by, for example the NSSF 135, AMF 130 or UPF 160. The network configuration includes: the network slice onto which a UE is allocated; priority with which network communications are handled by the network; the characteristics or capabilities of the UE device; and a Service Level Agreement.

The network performance is available to be measured between any points within the network 100. For improved accuracy, the network performance is measured end-to-end (that is, from a UE to the resource - or another UE - with which the UE is communicating) or for a round trip (from the UE, through the network and back to the same UE). Alternatively, for efficiency, the network performance is measured between only a portion of the network 100, including between the UE and the RAN access point 120 or between the RAN access point 120 and the network resource - or another UE - with which the UE is communicating.

Measured network performance is made available to, and within, the core network 125 by means of an interface between the AMF 130, NPAF 137, UPF 160, and/or the application server(s) providing the competitive activity (which may reside on the remote network 170.

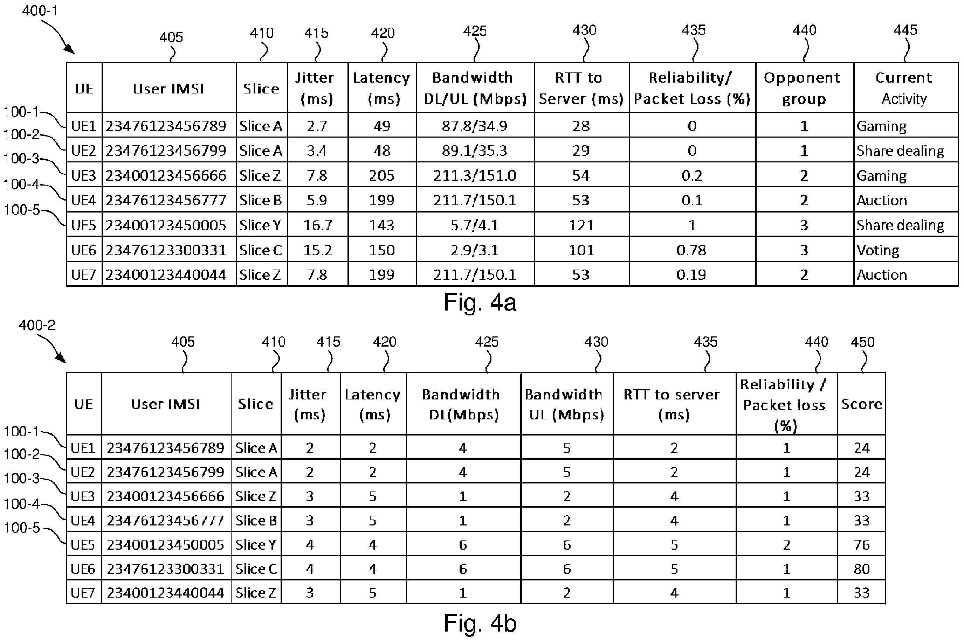

Network performance is ascertained by measuring network performance metrics; these are stored within the core network 125 within a database. Figures 4 show exemplary tables storing network performance metrics.

The extent to which a network configuration is adapted so as to improve fairness amongst competing UEs is dependent, at least, on the disparity in measured network performance. In particular, the network 100 aims to offset significant disparity in network performance, but without causing significant detriment to the practicability and/or mutual enjoyment of the competitive activity.

Where degrading network performance, the extent to which the configuration of the network is adapted is limited, not least so as to maintain acceptable network performance and to honour Service Level Agreements. This is appropriate, for example, in relation to degrading latency when users are competing in a fast-paced action game. Accordingly, the network 100 is prohibited (according to rules) from adapting network performance to an extent that exceeds threshold values, and is available only to be varied within a range of values.

In one example, the threshold values are absolute (*e.g.* a fixed value of network performance, such as a change in latency of no more than 100ms) and/or relative (*e.g.* a proportion of users' network performance, such as a change of no more than 50% of a given UE's latency).

In order to reduce computational processing, the frequency with which the network 100 is adapted is limited. For example, to mitigate frequent reconfiguration of the network, the network configuration is adapted so as to improve fairness when network performance exceeds a threshold value for a sustained (predefined) period of time. Alternatively or additionally, filtering (of extreme values) and/or smoothing (such as time-averaging) is applied to the measured network performance so as, at least, to filter out and/or smooth spikes in network performance.

Degrading network performance is selected as a least preferred - last resort - option. Instead, the network first assesses whether it is possible to improve the network performance for the UE(s) having a worse (or the worst) network performance amongst a group of competing UEs so as to reduce the disparity with the UE(s) having a better (or the best) network performance; if this improvement is insufficient to minimise the disparity, only then is the network performance in respect of the UE(s) with the better (or the best) network performance degraded.

In the claimed invention, the network configuration of the first network slice, onto which the first user is allocated, is adapted so as to improve network performance for the first user and to reduce the disparity in the network performance associated with the first user and the second user.

Figures 4 show exemplary tables 400 storing data in relation to network performance for UEs 110; these tables identify individual UEs and their network performance so as to assess when it is appropriate to adapt their network configuration so as to improve fairness.

Each table 400 comprises a plurality of fields for each UE, including, for example, fields for:

- a unique UE identifier 405, for example an International Mobile Subscriber Identity (IMSI) number;
- network performance metrics, relating to:

  ◦ jitter 415;
  ◦ latency 420;
  ◦ bandwidth (download and upload) 425;
  ◦ RTT 430;
  ◦ packet loss rate 435;

- network characteristics, including the network slice onto which a user is currently allocated 410;
- current activity with which a given UE is (or will be) engaged 445, for example a multiplayer game, an auction, financial trading and voting is also provided (albeit not shown in Figure 4b for brevity); and
- team (or "opponent group") 440, for a specific competitive activity, to which a given UE is allocated (albeit also not shown in Figure 4b for brevity).

In a first example shown in table 400-1 of Figure 4a, absolute values for network performance metrics are recorded.

For example, a first UE 100-1 and a third UE 100-3 are both engaged in a game and are assigned to different (competing) opponent groups within the game. The network identifies from table 400-1 a significant disparity in network performance between the first and third UEs, in particular in relation to latency. Accordingly, in order to improve fairness of the competition between the first and third UEs, the network reconfigures the network for the first and/or third UEs so as to balance, not least, latencies.

In a second example shown in table 400-2 of Figure 4b, network performance metrics are instead scored (or banded). These scores are, for example, determined in accordance with a key according to the table provided below:

| Network Performance Metric | Value | Score |
|---|---|---|
| Jitter | $\leq$ 2.5 ms | 1 |
| | > 2.5 ms and $\leq$ 5 ms | 2 |
| | > 5 ms and $\leq$ 10 ms | 3 |
| | > 10 ms and $\leq$ 20 ms | 4 |
| | > 20 ms | 5 |
| Latency | $\leq$ 10 ms | 1 |
| | > 10 ms and $\leq$ 50 ms | 2 |
| | > 50 ms and $\leq$ 100 ms | 3 |
| | > 100 ms and $\leq$ 150 ms | 4 |
| | > 150 ms | 5 |
| RTT | $\leq$ 10 ms | 1 |
| | > 10 ms and $\leq$ 30 ms | 2 |
| | > 30 ms and $\leq$ 50 ms | 3 |
| | > 50 ms and $\leq$ 100 ms | 4 |
| | > 100 ms | 5 |
| Reliability / Packet Loss | $\leq$ 0.5% | 1 |
| | > 0.5% and $\leq$ 1.0% | 2 |
| | > 1.0% and $\leq$ 2.0% | 3 |
| | > 2.0% and $\leq$ 3.0% | 4 |
| | > 3.0% | 5 |
| Bandwidth | > 200 Mbps | 1 |
| | > 150 Mbps and $\leq$ 200 Mbps | 2 |
| | > 50 Mbps and $\leq$ 150 Mbps | 3 |
| | > 25 Mbps and $\leq$ 50 Mbps | 4 |
| | $\leq$ 25 Mbps | 5 |

In this example, having a network performance that is likely to afford a competitive advantage (such as low latency or high bandwidth) receives a lower score (*i.e.* 1 being the lowest), whereas a network performance that is likely to afford a competitive disadvantage network performance (such as high jitter or high RTT) receives a higher score (*i.e.* 5 being the highest).

Table 400-2 includes an overall score of network performance 450 derived from the individual network performance metrics (415 to 440), for example, according to the formula:

*Overall score of network performance = Jitter score × (latency score + download bandwidth score + upload bandwidth score + RTT score - packet loss score).*

In this way, there is provided a convenient single value that conveys the overall network performance in respect of a given UE (*i.e.* the overall score of network performance 450). Accordingly, for competing UEs, having imbalanced overall scores of network performance 450, the network 100 reacts so as to reduce any disparity in the overall score of network performance 450 amongst the competing UEs.

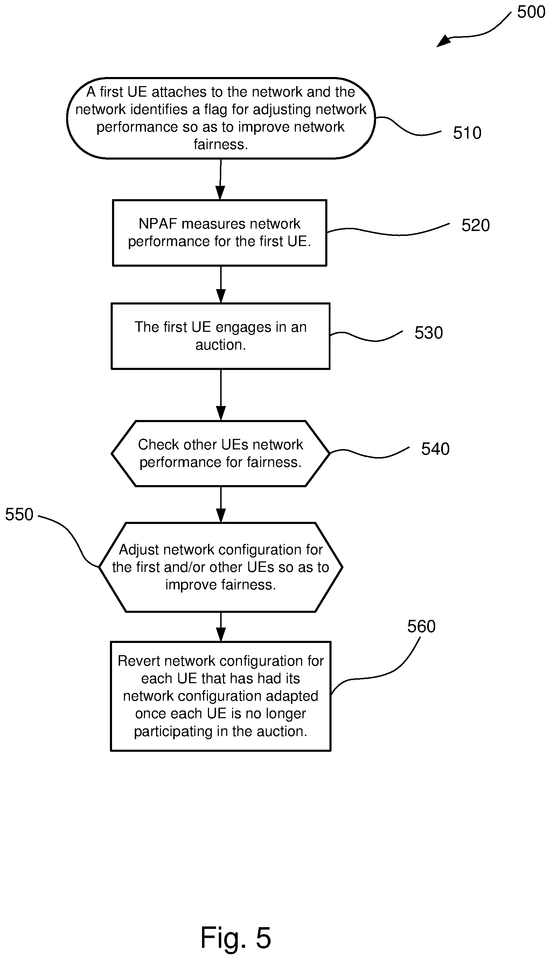

In a specific example, Figure 5 shows a process 500 for improving network fairness for UEs 110 competing in an auction over the network 100.

In a first step 510, the network identifies a first UE 110-1 as being eligible to have its network performance reconfigured in order to improve fairness; this is, for example, identified by way of a flag that it communicates to the network when the first UE 110-1 attaches to the network.

In a next step 520, the NPAF then measures the network performance in respect of the first UE 110-1. The first UE 110-1 then engages in an auction over the network, which is ascertained by the network 530. Accordingly, the network identifies other UEs that are competing with the first UE in the auction, and the NPAF measures the network performance in respect of these other UEs, and the network identifies a disparity in network performance which renders the auction unfair 540.

Accordingly, the network adjusts the network performance in respect of the first 110-1 and/or other UEs to an extent so as to minimise the disparity in network performance, thereby to maximise fairness 550.

Once a given UE leaves the auction, their network configuration is reverted so as to undo any reconfiguration that was performed so as to improve fairness during the auction 560; this triggers re-evaluation (and, if appropriate re-configuration) of the network configuration for the remaining UEs engaged in the auction.

Alternatives and modifications

In the aforementioned, the telecommunications network 100 is generally shown and described as a cellular wide area network in accordance with 5G technology. However, in one alternative the telecommunications network 100 is any kind of telecommunications network, including a wired network, a local area network, or combination of network types.

In Figure 1, the UEs 110 are shown as accessing the same core network. However, it will be appreciated that the UEs can access different core networks (and be connected to one another via the remote network 170).

In one example, instead of - or prior to - adapting the network configuration in response to identifying a disparity in network performance amongst competing UEs, the network instead notifies the competing UE (or at least one of the competing UEs) that there is an unfairness in network performance. An option is then given to the UEs - or at least one of the UEs (such as the UE with the lower/lowest network performance) - for the network to take action so as to improve fairness.

In another example, network performance is balanced for pairs of competing UEs or in aggregate across competing groups of UEs, such as teams.

In yet another alternative, the aforementioned processes of improving network fairness are performed when competing UEs 110 are used to support a competitive activity (rather than the UEs directly participating in the competitive activity). In one example, the UEs are associated with a competitor that is participating in a sport, and the UEs are used to communicate - over the network - with other competitors, a wider team and/or a referee. In a specific example, the UE is a voice, text or data (including telematics) communication device, and by the aforementioned process fairness can be sought to be improved by, for example, ensuring that new information pertinent to the outcome of the sport (*e.g.* changes to rules, conditions, race routes, participants, *etc.*) can successfully reach the intended recipients at substantially the same time.

In another alternative, the NPAF 137 resides at the edge of the network, and for example at the RAN access point (*e.g.* at an eNodeB).

The NPAF 137 ascertains network performance via the UPF 160, SMF 150, PCF 155, and/or AMF 130, with which the NPAF is in communication (either directly or indirectly) via appropriate interfaces.

In another alternative, the network 100 is also configured to adapt network performance so as to improve fairness in dependence on user characteristics, such as skill at a competitive activity and/or hardware capabilities.

In one example, a network slice is provided as an end-to-end network slice, spanning access, transport and core networks.

Each feature disclosed in the description, and (where appropriate) the claims and drawings may be provided independently or in any appropriate combination.

Reference numerals appearing in the claims are by way of illustration only and shall have no limiting effect on the scope of the claims.

**Claims**

1. A method (200) of managing a telecommunications network (100), the telecommunications network having a first user (110-1) and a second user (110-2), and the telecommunications network comprising a first network slice onto which the first user is allocated, the method comprising the step of:

   measuring network performance in respect of the first user and in respect of the second user (210);
   comparing network performance associated with the first user and the second user (220); identifying whether there is a disparity between the network performance associated with the first user and the second user that exceeds a threshold (230); and
   if it is identified that the disparity exceeds the threshold, adapting the network configuration of the first network slice so as to improve network performance for the first user and to reduce the disparity in the network performance associated with the first user and the second user (240).

2. A method according to Claim 1, wherein adapting the network configuration of the first network slice is performed by:

   re-allocating the first user (110-1) to a second network slice;
   prioritising processing of a network communication to and/or from the first user;
   changing a bandwidth allowance of the first network slice; and/or
   reallocating network resources to the first network slice.

3. A method according to any preceding claim, wherein adapting the network configuration of the first network slice is performed without changing a pathway through the telecommunications network (100) of network communications from and/or to the first user (110-1).

4. A method according to Claim 1 or 2, wherein adapting the network configuration of the first network slice is performed by changing a path through the telecommunications network (100) of a network communication from and/or to the first user (110-1).

5. A method according to any preceding claim, wherein adapting the network configuration of the first network slice comprises changing the location within the telecommunications network (100) of a network resource to be accessed by the first user (110-1).

6. A method according to any preceding claim, further comprising the step of determining an extent of the disparity, and adapting the network configuration of the first network slice in proportion to the determined extent of disparity.

7. A method according to any preceding claim, further comprising the step of limiting the extent to which the network configuration of the first network slice is adapted.

8. A method according to any preceding claims, wherein the network performance comprises a plurality of network performance metrics, and wherein the network configuration is adapted in dependence upon a weighting and/or ranking of the plurality of network performance metrics.

9. A method according to any preceding claim, further comprising the step of identifying an activity in which the first (110-1) and second (110-2) users are, or are to be, engaged over the telecommunications network (100).

10. A method according to any preceding claim, wherein the network configuration is adapted for the first (110-1) and the second (110-2) users.

11. A method according to any preceding claim, further comprising the step of reversing the adapting of the network configuration.

12. A telecommunications network (100) for facilitating the interaction between a first user (110-1) and a second (110-2) user over the telecommunications network, comprising

   a first network slice onto which the first user is allocated;
   a processor (137) configured to:

measure network performance in respect of the first user and of the second user (210);
compare network performance associated with the first user and the second user (220);
identify whether there is a disparity between the network performance associated with the first user and the second user that exceeds a threshold (230); and

a controller (135) configured to:
adapt the network configuration of the first network slice so as to improve network performance for the first user and to reduce the disparity in the network performance associated with the first user and the second user when the disparity exceeds the threshold.

13. A telecommunications network according to Claim 12, wherein the processor (137) and/or the controller (135) is/are provided: in a core of the telecommunications network; an edge of the telecommunications network; and/or User Equipment (UE) associated with the first and/or second user/s.

14. A telecommunications network according to Claim 12 or 13, wherein the network slice is an end-to-end network slice.

15. A computer-readable storage medium comprising instructions that, when executed by a processor associated with a telecommunications network, causes the telecommunication network to perform the method according to any of Claims 1 to 11.

**Patentansprüche**

1. Verfahren (200) zum Verwalten eines Telekommunikationsnetzwerks (100), wobei das Telekommunikationsnetzwerk einen ersten Benutzer (110-1) und einen zweiten Benutzer (110-2) aufweist und das Telekommunikationsnetzwerk eine erste Netzwerkscheibe, der der erste Benutzer zugeteilt ist, umfasst, das Verfahren den folgenden Schritt umfassend:

Messen einer Netzwerkleistung in Bezug auf den ersten Benutzer und in Bezug auf den zweiten Benutzer (210) ;
Vergleichen der Netzwerkleistung, die mit dem ersten Benutzer und dem zweiten Benutzer assoziiert ist (220);
Identifizieren, ob eine Disparität zwischen der Netzwerkleistung, die mit dem ersten Benutzer und dem zweiten Benutzer assoziiert ist, besteht, die einen Schwellenwert übersteigt (230); und
wenn identifiziert wird, dass die Disparität den Schwellenwert übersteigt, Anpassen der Netzwerkkonfiguration der ersten Netzwerkscheibe, um die Netzwerkleistung für den ersten Benutzer zu verbessern und um die Disparität in der Netzwerkleistung, die mit dem ersten Benutzer und dem zweiten Benutzer assoziiert ist, zu reduzieren (240).

2. Verfahren nach Anspruch 1, wobei Anpassen der Netzwerkkonfiguration der ersten Netzwerkscheibe durchgeführt wird durch:

Neuzuteilen des ersten Benutzers (110-1) zu einer zweiten Netzwerkscheibe;
Priorisieren der Verarbeitung einer Netzwerkkommunikation an und/oder von dem ersten Benutzer;
Ändern einer Bandbreitenzubilligung der ersten Netzwerkscheibe; und/oder
Neuzuteilen von Netzwerkbetriebsmitteln zu der ersten Netzwerkscheibe.

3. Verfahren nach einem der vorhergehenden Ansprüche, wobei Anpassen der Netzwerkkonfiguration der ersten Netzwerkscheibe durchgeführt wird, ohne einen Weg von Netzwerkkommunikationen von und/oder an den ersten Benutzer (110-1) durch das Telekommunikationsnetzwerk (100) zu ändern.

4. Verfahren nach Anspruch 1 oder 2, wobei Anpassen der Netzwerkkonfiguration der ersten Netzwerkscheibe durch Ändern eines Wegs (100) einer Netzwerkkommunikation von und/oder an den ersten Benutzer (110-1) durch das Telekommunikationsnetzwerk durchgeführt wird.

5. Verfahren nach einem der vorhergehenden Ansprüche, wobei Anpassen der Netzwerkkonfiguration der ersten Netzwerkscheibe umfasst, den Ort in dem Telekommunikationsnetzwerk (100) eines Netzwerkbetriebsmittels, auf das der erste Benutzer (110-1) zugreifen soll, zu ändern.

6. Verfahren nach einem der vorhergehenden Ansprüche, ferner umfassend den Schritt des Bestimmens eines Ausmaßes der Disparität und Anpassens der Netzwerkkonfiguration der ersten Netzwerkscheibe in Proportion zu dem bestimmten Ausmaß der Disparität.

7. Verfahren nach einem der vorhergehenden Ansprüche, ferner umfassend den Schritt des Begrenzens des Ausmaßes, zu dem die Netzwerkkonfiguration der ersten Netzwerkscheibe angepasst wird.

8. Verfahren nach einem der vorhergehenden Ansprüche, wobei die Netzwerkleistung eine Vielzahl von Netzwerkleistungsmetriken umfasst und wobei die Netzwerkkonfiguration in Abhängigkeit von einer Gewichtung und/oder Rangeinstufung der Vielzahl von Netzwerkleistungsmetriken angepasst wird.

9. Verfahren nach einem der vorhergehenden Ansprüche, ferner umfassend den Schritt des Identifizierens einer Aktivität, in der der erste (110-1) und zweite (110-2) Benutzer über das Telekommunikationsnetzwerk (100) begriffen sind oder begriffen sein sollen.

10. Verfahren nach einem der vorhergehenden Ansprüche, wobei die Netzwerkkonfiguration für den ersten (110-1) und den zweiten (110-2) Benutzer angepasst wird.

11. Verfahren nach einem der vorhergehenden Ansprüche, ferner umfassend den Schritt des Umkehrens der Anpassung der Netzwerkkonfiguration.

12. Telekommunikationsnetzwerk (100) zum Erleichtern der Interaktion zwischen einem ersten Benutzer (110-1) und einem zweiten (110-2) Benutzer über das Telekommunikationsnetzwerk, umfassend

 eine erste Netzwerkscheibe, der der erste Benutzer zugeteilt ist;
 einen Prozessor (137), konfiguriert zum:

  Messen einer Netzwerkleistung in Bezug auf den ersten Benutzer und den zweiten Benutzer (210);
  Vergleichen der Netzwerkleistung, die mit dem ersten Benutzer und dem zweiten Benutzer assoziiert ist, (220) ;
  Identifizieren, ob eine Disparität zwischen der Netzwerkleistung, die mit dem ersten Benutzer und dem zweiten Benutzer assoziiert ist, besteht, die einen Schwellenwert übersteigt (230); und

 eine Steuerung (135), konfiguriert zum:
 Anpassen der Netzwerkkonfiguration der ersten Netzwerkscheibe, um die Netzwerkleistung für den ersten Benutzer zu verbessern und um die Disparität in der Netzwerkleistung, die mit dem ersten Benutzer und dem zweiten Benutzer assoziiert ist, zu reduzieren, wenn die Disparität den Schwellenwert übersteigt.

13. Telekommunikationsnetzwerk nach Anspruch 12, wobei der Prozessor (137) und/oder die Steuerung (135) bereitgestellt wird/werden: in einem Kern des Telekommunikationsnetzwerks; einem Rand des Telekommunikationsnetzwerks; und/oder einer mit dem ersten und/oder zweiten Benutzer assoziierten Benutzerausrüstung (UE).

14. Telekommunikationsnetzwerk nach Anspruch 12 oder 13, wobei die Netzwerkscheibe eine Ende-zu-Ende-Netzwerkscheibe ist.

15. Computerlesbares Speichermedium, umfassend Anweisungen, die, wenn sie durch einen mit einem Telekommunikationsnetzwerk assoziierten Prozessor ausgeführt werden, das Telekommunikationsnetzwerk veranlassen, das Verfahren nach einem der Ansprüche 1 bis 11 durchzuführen.

**Revendications**

1. Procédé (200) de gestion d'un réseau de télécommunications (100), le réseau de télécommunications ayant un premier utilisateur (110-1) et un deuxième utilisateur (110-2), et le réseau de télécommunications comprenant une première tranche de réseau à laquelle le premier utilisateur est attribué, le procédé comprenant l'étape consistant à :

 mesurer une performance de réseau par rapport au premier utilisateur et par rapport au deuxième utilisateur (210) ;
 comparer une performance de réseau associée au premier utilisateur et au deuxième utilisateur (220) ; identifier s'il existe une disparité entre la performance de réseau associée au premier utilisateur et au deuxième utilisateur qui dépasse un seuil (230) ; et

s'il est identifié que la disparité dépasse le seuil, adapter la configuration de réseau de la première tranche de réseau de sorte à améliorer une performance de réseau pour le premier utilisateur et réduire la disparité dans la performance de réseau associée au premier utilisateur et au deuxième utilisateur (240).

2. Procédé selon la revendication 1, dans lequel l'adaptation de la configuration de réseau de la première tranche de réseau est réalisée par :

le fait de ré-attribuer le premier utilisateur (110-1) à une deuxième tranche de réseau ;
le fait de prioriser le traitement d'une communication de réseau vers et/ou à partir du premier utilisateur ;
le fait de changer une allocation de bande passante de la première tranche de réseau ; et/ou
le fait de ré-attribuer des ressources de réseau à la première tranche de réseau.

3. Procédé selon n'importe quelle revendication précédente, dans lequel l'adaptation de la configuration de réseau de la première tranche de réseau est réalisée sans changer un chemin à travers le réseau de télécommunications (100) de communications de réseau à partir du et/ou vers le premier utilisateur (110-1).

4. Procédé selon la revendication 1 ou 2, dans lequel l'adaptation de la configuration de réseau de la première tranche de réseau est réalisée en changeant un chemin à travers le réseau de télécommunications (100) d'une communication de réseau à partir du et/ou vers le premier utilisateur (110-1).

5. Procédé selon n'importe quelle revendication précédente, dans lequel l'adaptation de la configuration de réseau de la première tranche de réseau comprend le changement de la localisation au sein du réseau de télécommunications (100) d'une ressource de réseau à laquelle doit accéder le premier utilisateur (110-1).

6. Procédé selon n'importe quelle revendication précédente, comprenant en outre l'étape consistant à déterminer une ampleur de la disparité, et adapter la configuration de réseau de la première tranche de réseau en proportion avec l'ampleur déterminée de la disparité.

7. Procédé selon n'importe quelle revendication précédente, comprenant en outre l'étape consistant à limiter l'ampleur suivant laquelle la configuration de réseau de la première tranche de réseau est adaptée.

8. Procédé selon n'importe quelles revendications précédentes, dans lequel la performance de réseau comprend une pluralité de métriques de mesure de la performance de réseau, et dans lequel la configuration de réseau est adaptée en dépendance d'une pondération et/ou d'un classement de la pluralité de métriques de mesure de la performance de réseau.

9. Procédé selon n'importe quelle revendication précédente, comprenant en outre l'étape consistant à identifier une activité à laquelle les premier (110-1) et deuxième (110-2) utilisateurs prennent part, ou vont prendre part, par l'intermédiaire du réseau de télécommunications (100).

10. Procédé selon n'importe quelle revendication précédente, dans lequel la configuration de réseau est adaptée pour le premier (110-1) et le deuxième (110-2) utilisateurs.

11. Procédé selon n'importe quelle revendication précédente, comprenant en outre l'étape consistant à inverser l'adaptation de la configuration de réseau.

12. Réseau de télécommunications (100) pour faciliter l'interaction entre un premier utilisateur (110-1) et un deuxième (110-2) utilisateur par l'intermédiaire du réseau de télécommunications, comprenant

une première tranche de réseau à laquelle le premier utilisateur est attribué ;
un processeur (137) configuré pour :

mesurer une performance de réseau par rapport au premier utilisateur et au deuxième utilisateur (210) ;
comparer une performance de réseau associée au premier utilisateur et au deuxième utilisateur (220) ;
identifier s'il existe une disparité entre la performance de réseau associée au premier utilisateur et au deuxième utilisateur qui dépasse un seuil (230) ; et

un organe de commande (135) configuré pour :
adapter la configuration de réseau de la première tranche de réseau de sorte à améliorer une performance de réseau pour le premier utilisateur et à réduire la disparité dans la performance de réseau associée au premier utilisateur et au deuxième utilisateur lorsque la disparité dépasse le seuil.

13. Réseau de télécommunications selon la revendication 12, dans lequel le processeur (137) et/ou l'organe de commande (135) est/sont prévus : dans un coeur du réseau de télécommunications ; un bord du réseau de télécommunications ; et/ou un équipement utilisateur (UE) associé au premier et/ou au deuxième utilisateur/s.

14. Réseau de télécommunications selon la revendication 12 ou 13, dans lequel la tranche de réseau est une tranche de réseau de bout en bout.

15. Support de stockage lisible par ordinateur comprenant des instructions qui, lorsqu'elles sont exécutées par un processeur associé à un réseau de télécommunications, amène le réseau de télécommunications à réaliser le procédé selon n'importe lesquelles des revendications 1 à 11.

Fig. 1

200

**210** — Ascertain network performances for a first UE and for a second UE engaged in a competitive activity over a network.

**220** — Compare the ascertained network performances. Is there a disparity between the compared network performances?

No

Yes

**230** — Does the disparity exceed a threshold?

No

Yes

**240** — Adapt the network configuration for the first and/or second user/s so as substantially to equalise the network performance, thereby to improve network fairness.

## Fig. 2

EP 3 912 314 B1

300

| 110-1 | 120 | 130 | 160 | 150 | 155 | 145 | 165 | 137 |
|-------|-----|-----|-----|-----|-----|-----|-----|------|
| UE | RAN | AMF | UPF | SMF | PCF | UDM | DN | NPAF |

310

330

320

340

350

Fig. 3

**400-1**

| UE | User IMSI | Slice | Jitter (ms) | Latency (ms) | Bandwidth DL/UL (Mbps) | RTT to Server (ms) | Reliability/ Packet Loss (%) | Opponent group | Current Activity |
|---|---|---|---|---|---|---|---|---|---|
| UE1 | 234761234560789 | Slice A | 2.7 | 49 | 87.8/34.9 | 28 | 0 | 1 | Gaming |
| UE2 | 234761234560799 | Slice A | 3.4 | 48 | 89.1/35.3 | 29 | 0 | 1 | Share dealing |
| UE3 | 234001234560666 | Slice Z | 7.8 | 205 | 211.3/151.0 | 54 | 0.2 | 2 | Gaming |
| UE4 | 234761234560777 | Slice B | 5.9 | 199 | 211.7/150.1 | 53 | 0.1 | 2 | Auction |
| UE5 | 234001234550005 | Slice Y | 16.7 | 143 | 5.7/4.1 | 121 | 1 | 3 | Share dealing |
| UE6 | 234761233500331 | Slice C | 15.2 | 150 | 2.9/3.1 | 101 | 0.78 | 3 | Voting |
| UE7 | 234001234440044 | Slice Z | 7.8 | 199 | 211.7/150.1 | 53 | 0.19 | 2 | Auction |

Column references: 405, 410, 415, 420, 425, 430, 435, 440, 445

## Fig. 4a

**400-2**

| UE | User IMSI | Slice | Jitter (ms) | Latency (ms) | Bandwidth DL(Mbps) | Bandwidth UL (Mbps) | RTT to server (ms) | Reliability / Packet loss (%) | Score |
|---|---|---|---|---|---|---|---|---|---|
| UE1 | 234761234560789 | Slice A | 2 | 2 | 4 | 5 | 2 | 1 | 24 |
| UE2 | 234761234560799 | Slice A | 2 | 2 | 4 | 5 | 2 | 1 | 24 |
| UE3 | 234001234560666 | Slice Z | 3 | 5 | 1 | 2 | 4 | 1 | 33 |
| UE4 | 234761234560777 | Slice B | 3 | 5 | 1 | 2 | 4 | 1 | 33 |
| UE5 | 234001234550005 | Slice Y | 4 | 4 | 6 | 6 | 5 | 2 | 76 |
| UE6 | 234761233500331 | Slice C | 4 | 4 | 6 | 6 | 5 | 1 | 80 |
| UE7 | 234001234440044 | Slice Z | 3 | 5 | 1 | 2 | 4 | 1 | 33 |

Column references: 405, 410, 415, 420, 425, 430, 435, 440, 450

## Fig. 4b

500

A first UE attaches to the network and the network identifies a flag for adjusting network performance so as to improve network fairness.

510

NPAF measures network performance for the first UE.

520

The first UE engages in an auction.

530

Check other UEs network performance for fairness.

540

550

Adjust network configuration for the first and/or other UEs so as to improve fairness.

560

Revert network configuration for each UE that has had its network configuration adapted once each UE is no longer participating in the auction.

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1768351 A1

- WO 2018121880 A1